# EUROPEAN PATENT APPLICATION

(11) **EP 4 742 137 A1**
(43) Date of publication of application: **13.05.2026**
(21) Application number: 25214943.0
(22) Date of filing: 11.11.2025
(51) Int. Cl.: G06Q 40/12, G06N 20/00

(54) **MACHINE LEARNING BASED SYSTEMS AND METHODS FOR IDENTIFYING EQUIVALENT ENTITIES**

(30) Priority: 11.11.2024 US 202418942821
(71) Applicant: Highradius Corporation, Houston, TX 77042 (US)
(72) Inventor: Kunwar, Anupam, 500081 Hyderabad (IN); Roy Burman, Ramit, 500081 Hyderabad (IN); Shrivastava, Apoorva, 500081 Hyderabad (IN)
(74) Representative: Caldon, Giuliano

(57) **Abstract**

A machine learning based (ML-based) computing method and system for automatically identifying equivalent entities, is disclosed. The method involves obtaining transaction data, standardizing data fields, and generating unique transaction numbers. Entities with identical transaction numbers are grouped into initial groups. An ML model, utilizing an apriori algorithm, eliminates certain groups to form intermediate groups based on frequent item sets. An iterative unionization process then merges intermediate groups to form resultant groups of equivalent entities. The method further includes assessing model accuracy, with optional re-training if accuracy falls below a threshold. Standardization steps include column name alignment, datetime and numeric conversion, currency conversion, intra-company removal, and write-off removal. Resultant groups are provided to end users via interfaces, allowing accurate, automated identification of equivalent entities in financial transactions.

## Description

### FIELD OF INVENTION

Embodiments of the present disclosure relate to machine learning based (ML-based) computing systems, and more particularly relates to a ML-based computing method and system for identifying one or more equivalent entities.

### BACKGROUND

In accounts receivables, an entity may include a company, organization, or individual, conducting business activities including a financial transaction. Equivalent entities refer to a group of entities within a business or financial system, where each member has an authority to carry out financial transactions, including at least one of: making payments and claiming credits, on behalf of any other member in the group. Here each member of the group has specific identification (for example: Entity ID). For equivalent entities, if an invoice or credit memo is addressed to a particular entity ID, then another entity ID within the same group may settle the invoice or claim the credit. The key feature of equivalent entities is their shared financial responsibilities and permissions, which allow them to act as payers for one another, creating a flexible network of financial interactions within the group.

At present, no automated solutions exist to identify equivalent entities. As a result, finance teams must manually identify and group these customers. This process usually involves carefully reviewing entities accounts and transactions to identify interconnected financial responsibilities and permissions that define equivalent entities. The process further requires finance professionals to meticulously analyze large volumes of data, relying on their expertise and attention to detail to accurately group these entities. This manual approach is crucial for maintaining the integrity of financial operations and reporting within the organization.

However, this manual approach has significant limitations and drawbacks. The manual approach is inherently time-consuming and labor-intensive, requiring considerable human resources and meticulous attention to detail. Additionally, the accuracy of this manual process depends heavily on the experience and expertise of the finance professionals involved, introducing subjectivity and an increased risk of errors. These challenges not only slow down financial operations but also undermine an accuracy and reliability of financial reporting. As a result, the manual identification and grouping of equivalent entities present a major bottleneck in optimizing financial processes, underscoring an urgent need for a more efficient and precise solution.

Hence, there is a need for an improved machine learning based (ML-based) computing system and method for identifying one or more equivalent entities, in order to address the aforementioned issues.

### SUMMARY

This summary is provided to introduce a selection of concepts, in a simple manner, which is further described in the detailed description of the disclosure. This summary is neither intended to identify key or essential inventive concepts of the subject matter nor to determine the scope of the disclosure.

In accordance with an embodiment of the present disclosure, a machine-learning based (ML-based) computing method for automatically identifying one or more equivalent entities, is disclosed. The ML-based computing method comprises obtaining, by one or more hardware processors, data associated with one or more financial transactions performed by one or more entities, from one or more databases. The data comprise one or more data fields associated with at least one of: one or more transaction types, one or more company codes, one or more document types, one or more document numbers, one or more posting keys, one or more posting dates, one or more invoice dates, one or more clearing dates, one or more clearing documents, one or more invoice amounts, one or more entity names, and one or more entity numbers.

The ML-based computing method further comprises pre-processing, by the one or more hardware processors, the data associated with the one or more financial transactions. In an embodiment, pre-processing the one or more data comprise standardizing the one or more data fields.

The ML-based computing method further comprises generating, by the one or more hardware processors, one or more transaction numbers for each of the one or more financial transactions by concatenating the pre-processed one or more data fields .

The ML-based computing method further comprises grouping, by the one or more hardware processors, one or more entities having identical transaction numbers, into one or more initial groups.

The ML-based computing method further comprises eliminating, by the one or more hardware processors, one or more groups from the one or more initial groups using a machine learning (ML) model to obtain one or more intermediate groups. The ML model is configured to obtain the one or more intermediate groups using an association identified within the one or more initial groups based on frequent item sets within the one or more initial groups.

The ML-based computing method further comprises comparing, by the one or more hardware processors, the one or more entities across the one or more intermediate groups to obtain one or more resultant groups using an iterative unionization process. In an embodiment, each of the one or more resultant group comprises the one or more equivalent entities performing the one or more financial transactions.

The ML-based computing method further comprises providing, by the one or more hardware processors, the one or more resultant groups as an output to one or more end users through one or more user interfaces of one or more electronic devices associated with the one or more end users.

In an embodiment, standardizing the data comprises at least one of: column name standardization, datetime and numeric conversion, handling of null records, currency conversion, intra-company removal, and write-off removal.

In another embodiment, further comprising (a) determining, by the one or more hardware processors, whether one or more datasets comprising the data having uniformity and clarity, providing data analysis and interpretation of the data, using the column name standardization, wherein the column name standardization comprise one or more information varies from one or more types of enterprise resource planning (ERP); (b) standardizing, by the one or more hardware processors, date and numeric formats across the one or more data fields using the datetime and numeric conversion; (c) filtering, by the one or more hardware processors, the null records based on at least one of: one or more seasonal trends and an impact of the null records with one or more values; (d) standardizing, by the one or more hardware processors, the one or more financial transactions based on one or more functional currencies of one or more business units to synchronize one or more transactional data across one or more sources, for consistency of the data, using the currency conversion; (e) filtering, by the one or more hardware processors, the one or more financial transactions between the one or more business units of the one or more entities, using the intra-company removal; and (f) ending, by the one or more hardware processors, the one or more financial transactions where one or more irrelevant invoices using a single offset record by which one or more irrelevant entities are grouped, using the write-off removal.

In yet another embodiment, eliminating the one or more groups from the one or more initial groups using the ML model to obtain the one or more intermediate groups, comprises: (a) obtaining, by the one or more hardware processors, information associated with the one or more initial groups, as one or more inputs to the ML model, wherein the ML model is an unsupervised ML model comprising an apriori model; (b) setting, by the one or more hardware processors, one or more values for one or more parameters associated with the one or more entities in the ML model, wherein the one or more parameters comprise at least one of: a support threshold, a confidence threshold, and a pre-defined length of grouping of the one or more entities; (c) computing, by the one or more hardware processors, a support for each of the entity based on a frequency of occurrence of each of the entity within the one or more initial groups; (d) computing, by the one or more hardware processors, a support for each pair of the one or more entities with second length, wherein the support for a combination of the one or more entities based on a frequency of occurrence of the combination of the one or more entities, iteratively until the pre-defined length of grouping is attained, wherein the combination of the one or more entities comprises grouping of the one or more entities having the support exceeding the support threshold; and (e) computing, by the one or more hardware processors, a confidence value for each of the combination of the one or more entities using the support computed for each of the entity and the support computed for the combination of the one or more entities, wherein the one or more intermediate groups are obtained from the combination of the one or more entities having the confidence value exceeding the confidence threshold.

In yet another embodiment, the iterative unionization process comprises: (a) determining, by the one or more hardware processors, an intersection of each intermediate group with the one or more intermediate groups; (b) performing, by the one or more hardware processors, an unionization process between each intersected intermediate group, to obtain the one or more resultant groups; (c) comparing, by the one or more hardware processors, the one or more intermediate groups with the one or more resultant groups to determine whether a count of the one or more resultant groups is equal to a count of the one or more intermediate groups; and (d) repeating, by the one or more hardware processors, the iterative unionization process until the count of the one or more resultant groups is equal to the count of the one or more resultant groups. The one or more resultant groups are determined as one or more inputs to the iterative unionization process when the count of the one or more resultant groups is not equal to the count of the one or more intermediate groups.

In yet another embodiment, the ML-based computing method further comprises assessing, by the one or more hardware processors, an accuracy of the ML model by comparing the one or more resultant groups with one or more historical entity grouping data.

In yet another embodiment, the ML-based computing method further comprises (a) re-training, by the one or more hardware processors, the ML model by adjusting the one or more values of the one or more parameters, when the accuracy of the ML model on obtaining the one or more intermediate groups, is below a predetermined accuracy threshold value; and (b) processing, by the one or more hardware processors, the re-trained ML model with the adjusted one or more values of the one or more parameters to optimize the accuracy of the ML model.

In one aspect, a machine learning based (ML-based) computing system for automatically identifying one or more equivalent entities, is disclosed. The ML-based computing system includes one or more hardware processors and a memory coupled to the one or more hardware processors. The memory includes a plurality of subsystems in the form of programmable instructions executable by the one or more hardware processors.

The plurality of subsystems comprises a data obtaining subsystem configured to obtain data associated with one or more financial transactions performed by one or more entities, from one or more databases. The data comprise one or more data fields associated with at least one of: one or more transaction types, one or more company codes, one or more document types, one or more document numbers, one or more posting keys, one or more posting dates, one or more invoice dates, one or more clearing dates, one or more clearing documents, one or more invoice amounts, one or more entity names, and one or more entity numbers.

The plurality of subsystems further comprises a data pre-processing subsystem configured to pre-process the data associated with the one or more financial transactions. In an embodiment, pre-processing of the one or more data comprise standardizing the one or more data fields.

The plurality of subsystems further comprises an entity grouping subsystem configured to generate one or more transaction numbers for each of the one or more financial transactions by concatenating the pre-processed one or more data fields.

The entity grouping subsystem is further configured to one or more entities having identical transaction numbers, into one or more initial groups.

The entity grouping subsystem is further configured to eliminate one or more groups from the one or more initial groups using a machine learning (ML) model to obtain one or more intermediate groups. The ML model is configured to obtain the one or more intermediate groups using an association identified within the one or more initial groups based on frequent item sets within the one or more initial groups.

The plurality of subsystems further comprises an entity identifying subsystem configured to compare the one or more entities across the one or more intermediate groups to obtain one or more resultant groups using an iterative unionization process. In an embodiment, each of the one or more resultant group comprises the one or more equivalent entities performing the one or more financial transactions.

The plurality of subsystems further comprises an output subsystem configured to provide the one or more resultant groups as an output, to one or more end users through one or more user interfaces of one or more electronic devices associated with the one or more end users.

In another aspect, a non-transitory computer-readable storage medium having instructions stored therein that, when executed by a hardware processor, causes the processor to perform method steps as described above.

To further clarify the advantages and features of the present disclosure, a more particular description of the disclosure will follow by reference to specific embodiments thereof, which are illustrated in the appended figures. It is to be appreciated that these figures depict only typical embodiments of the disclosure and are therefore not to be considered limiting in scope. The disclosure will be described and explained with additional specificity and detail with the appended figures.

### BRIEF DESCRIPTION OF DRAWINGS

The disclosure will be described and explained with additional specificity and detail with the accompanying figures in which:
**FIG. 1** is a block diagram illustrating a computing environment with a machine learning based (ML-based) computing system for identifying one or more equivalent entities, in accordance with an embodiment of the present disclosure;
**FIG. 2** is a detailed view of the ML-based computing system for identifying the one or more equivalent entities, in accordance with another embodiment of the present disclosure;
**FIG. 3** is an overall process flow of identifying the one or more equivalent entities, in accordance with another embodiment of the present disclosure;
**FIG. 4** is an exemplary process flow depicting eliminating one or more groups from one or more initial groups using a machine learning (ML) model to obtain one or more intermediate groups, in accordance with another embodiment of the present disclosure;
**FIG. 5** is an exemplary process flow of identifying the one or more equivalent entities using an iterative unionization process, in accordance with another embodiment of the present disclosure;
**FIGS. 6A-6D** are exemplary process flows of identifying the one or more equivalent entities using the iterative unionization process, such as shown in **FIG. 5**, in accordance with another embodiment of the present disclosure; and
**FIG. 7** is a flow chart illustrating a machine-learning based (ML-based) computing method for identifying the one or more equivalent entities, in accordance with an embodiment of the present disclosure;

Further, those skilled in the art will appreciate that elements in the figures are illustrated for simplicity and may not have necessarily been drawn to scale. Furthermore, in terms of the construction of the device, one or more components of the device may have been represented in the figures by conventional symbols, and the figures may show only those specific details that are pertinent to understanding the embodiments of the present disclosure so as not to obscure the figures with details that will be readily apparent to those skilled in the art having the benefit of the description herein.

### DETAILED DESCRIPTION OF THE DISCLOSURE

For the purpose of promoting an understanding of the principles of the disclosure, reference will now be made to the embodiment illustrated in the figures and specific language will be used to describe them. It will nevertheless be understood that no limitation of the scope of the disclosure is thereby intended. Such alterations and further modifications in the illustrated system, and such further applications of the principles of the disclosure as would normally occur to those skilled in the art are to be construed as being within the scope of the present disclosure. It will be understood by those skilled in the art that the foregoing general description and the following detailed description are exemplary and explanatory of the disclosure and are not intended to be restrictive thereof.

In the present document, the word "exemplary" is used herein to mean "serving as an example, instance, or illustration." Any embodiment or implementation of the present subject matter described herein as "exemplary" is not necessarily to be construed as preferred or advantageous over other embodiments.

The terms "comprise", "comprising", or any other variations thereof, are intended to cover a non-exclusive inclusion, such that one or more devices or sub-systems or elements or structures or components preceded by "comprises... a" does not, without more constraints, preclude the existence of other devices, sub-systems, additional sub-modules. Appearances of the phrase "in an embodiment", "in another embodiment" and similar language throughout this specification may, but not necessarily do, all refer to the same embodiment.

Unless otherwise defined, all technical and scientific terms used herein have the same meaning as commonly understood by those skilled in the art to which this disclosure belongs. The system, methods, and examples provided herein are only illustrative and not intended to be limiting.

A computer system (standalone, client or server computer system) configured by an application may constitute a "module" (or "subsystem") that is configured and operated to perform certain operations. In one embodiment, the "module" or "subsystem" may be implemented mechanically or electronically, so a module includes dedicated circuitry or logic that is permanently configured (within a special-purpose processor) to perform certain operations. In another embodiment, a "module" or "subsystem" may also comprise programmable logic or circuitry (as encompassed within a general-purpose processor or other programmable processor) that is temporarily configured by software to perform certain operations.

Accordingly, the term "module" or "subsystem" should be understood to encompass a tangible entity, be that an entity that is physically constructed, permanently configured (hardwired) or temporarily configured (programmed) to operate in a certain manner and/or to perform certain operations described herein.

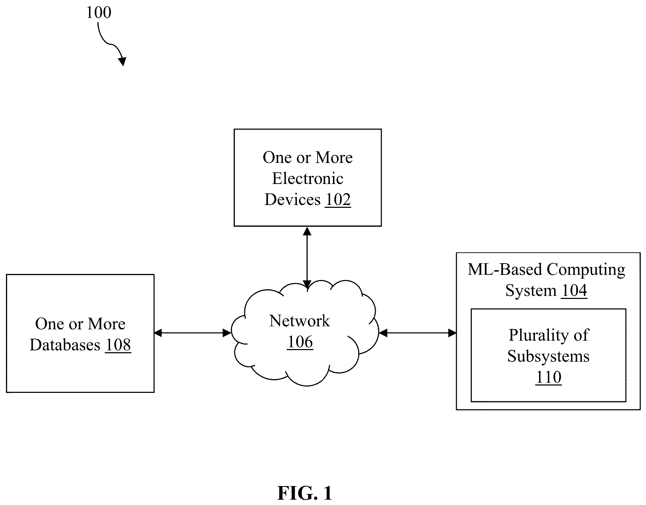

Referring now to the drawings, and more particularly to **FIG. 1** through **FIG. 7**, where similar reference characters denote corresponding features consistently throughout the figures, there are shown preferred embodiments and these embodiments are described in the context of the following exemplary system and/or method.

### Definitions:

Account Receivables (AR) are balance of money due to a company for goods or services delivered or used but not yet paid for by entities.

Entity refers to a body that availed a good or service from an account and owes money to the account.

Entity identity refers to any field that uniquely identifies an individual entity. The entity identity may be both entity name and/or entity number in case of AR Data.

Entity code refers to a company code differentiating the entity of a company.

Doctype refers to alphabetical values that signify transaction type of a record.

PostingKey refers to numerical values that signify transaction type of a record.

PostingDate refers to date on which a record was introduced in an enterprise resource planning (ERP) system.

ClearingDate refers to date on which the record was closed or applied.

Amount refers to an invoice amount related to a record.

DocumentNumber refers to an unique identity assigned to each record.

ClearingDocument refers to the document number of the record that is used to clear a record.

Conventionally, in an ideal case, if an invoice is raised against an entity identity (ID), then a payment to the invoice is made by a same entity ID. However, in the real world due to many possible reasons, the payment to this invoice may be made by another entity ID which may be related to the invoiced entity ID. Similarly, a credit memo issued to an entity ID may be claimed by another entity ID. These entity IDs are called effective payer for each other when in a group of entities.

The group of entity IDs where each entity may pay on behalf of each other as equivalent entity IDs. In a scenario where an entity ID may pay for another entity ID but not the other way around. The payer entity ID is called as an alternate payer for the other entity ID. The alternate payer is a unidirectional scenario whereas the equivalent entity ID is a bi-directional scenario.

For example, below is a table 1 depicts the alternate payer and the equivalent entity ID.

**TABLE. 1**

| transaction_ type | company_ code | doctype | posti ng_k ey | posting_ date_nor m | clearing _date_n orm | invoic e_am ount | custom er_nam e | customer _number |
|---|---|---|---|---|---|---|---|---|
| Invoice | US49 | RV | 1 | 7-Dec-17 | 13-Feb-18 | $1,24 1.59 | XXXX US | 213923 |
| Payment | US49 | DB | 15 | 26-Jan-18 | 13-Feb-18 | $1,24 1.59 | YYYY Mexico | 219435 |
| Adjustment | US49 | AB | 7 | 13-Feb-18 | 13-Feb-18 | $1,24 1.59 | YYYY Mexico | 219435 |
| Adjustment | US49 | AB | 17 | 13-Feb-18 | 13-Feb-18 | $1,24 1.59 | XXXX US | 213923 |

The table 1 depicts that the entity ID XXXX US has an invoice which is getting paid by XXXX Mexico, then to reconcile, adjustments are used to transfer the credit from XXXX Mexico to XXXX US. Hence, XXXX Mexico is the alternate payer for XXXX US. XXXX Mexico and XXXX US are equivalent payers for each other.

There are reasons for existence of equivalent entity IDs. Same entity may have been setup with different names for tracking purposes or other reasons so the entities get assigned with different entity IDs. Parent entities may pay for subsidiary, as a business may have been set up such that all payments for an organization get handled only by the parent entities. A subsidiary entity may pay for another subsidiary entity, due to ease of payments or due to cross border related payments. A subsidiary may have been set up to clear all the payments for another subsidiary.

An account may split into one or more entities for legal or reporting purposes but the entity may keep paying to the same entity, so the same entity may be registered with a different entity ID in the other entity. Similarly, company codes within an account may merge, or the account may acquire an external entity due to which the same entity may exist in the merged entity as a different entity ID. The entities may merge with or acquire another entity, a system may still maintain different entity IDs even after the merger for various reasons. When an entity frequently has a third party making payments on behalf of the entity, then the third party is set as an effective payer for the entity.

**FIG. 1** is a block diagram illustrating a computing environment 100 with a machine learning based (ML-based) computing system 104 for identifying one or more equivalent entities for each entity, in accordance with an embodiment of the present disclosure. According to **FIG. 1**, the computing environment 100 includes one or more electronic devices 102 that are communicatively coupled to the ML-based computing system 104 through a network 106. The one or more electronic devices 102 through which one or more end users provide one or more inputs to the ML-based computing system 104.

The present invention is configured to identify the one or more equivalent entities for each entity. The ML-based computing system 104 is initially configured to obtain data associated with one or more financial transactions performed by one or more entities, from one or more databases 108. In an embodiment, the data comprise one or more data fields associated with at least one of: one or more transaction types, one or more company codes, one or more document types, one or more document numbers, one or more posting keys, one or more posting dates, one or more invoice dates, one or more clearing dates, one or more clearing documents, one or more invoice amounts, one or more entity names, one or more entity numbers, and the like.

The ML-based computing system 104 is further configured to pre-process the data associated with the one or more financial transactions. In an embodiment, pre-processing the one or more data may include standardizing the one or more data fields. The ML-based computing system 104 is further configured to generate one or more transaction numbers for each of the one or more financial transactions by concatenating the pre-processed one or more data fields . The ML-based computing system 104 is further configured to group one or more entities having identical transaction numbers, into one or more initial groups. In an embodiment, the one or more transaction numbers are one or more combinations of at least one of: the one or more clearing documents, the one or more clearing dates, the one or more company codes, and the like. In an embodiment, the one or more transaction numbers are configured to link the one or more data fields indicating a complete transaction cycle from creation of one or more invoices to clearing of the one or more invoices.

The ML-based computing system 104 is further configured to eliminate one or more groups from the one or more initial groups using a machine learning (ML) model to obtain one or more intermediate groups. The ML model is configured to obtain the one or more intermediate groups using an association identified within the one or more initial groups based on frequent item sets within the one or more initial groups. The ML-based computing system 104 is further configured to compare the one or more entities across the one or more intermediate groups to obtain one or more resultant groups using an iterative unionization process. In an embodiment, each of the one or more resultant group includes the one or more equivalent entities performing the one or more financial transactions. The ML-based computing system 104 is further configured to provide the one or more resultant groups as an output to the one or more end users through one or more user interfaces of the one or more electronic devices 102 associated with the one or more end users.

In an embodiment, the one or more entities may include at least one of: one or more customers, one or more organizations, one or more corporations, one or more parent companies, one or more subsidiaries, one or more joint ventures, one or more partnerships, one or more governmental bodies, one or more associations, and one or more legal entities, and the like. In an embodiment, the one or more end users may include at least one of: one or more data analysts, one or more business analysts, one or more cash analysts, one or more financial analysts, one or more collection analysts, one or more debt collectors, one or more professionals associated with cash and collection management, and the like.

The ML-based computing system 104 may be hosted on a central server including at least one of: a cloud server or a remote server. Further, the network 106 may be at least one of: a Wireless-Fidelity (Wi-Fi) connection, a hotspot connection, a Bluetooth connection, a local area network (LAN), a wide area network (WAN), any other wireless network, and the like. In an embodiment, the one or more electronic devices 102 may include at least one of: a laptop computer, a desktop computer, a tablet computer, a Smartphone, a wearable device, a Smart watch, and the like.

Further, the computing environment 100 includes the one or more databases 108 communicatively coupled to the ML-based computing system 104 through the network 106. In an embodiment, the one or more databases 108 includes at least one of: one or more relational databases, one or more object-oriented databases, one or more data warehouses, one or more cloud-based databases, and the like. In another embodiment, a format of the one or more data obtained from the one or more databases 108 may include at least one of: a comma-separated values (CSV) format, a JavaScript Object Notation (JSON) format, an Extensible Markup Language (XML), spreadsheets, and the like.

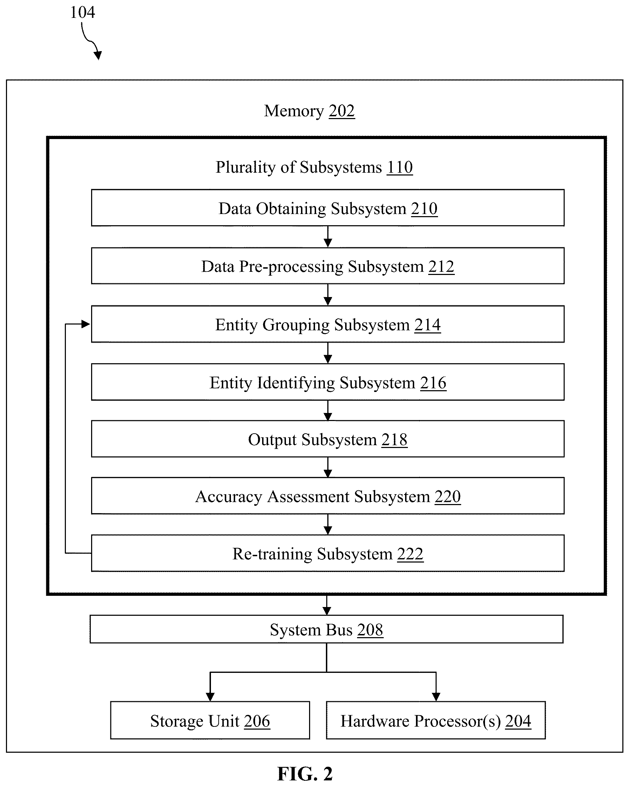

Furthermore, the one or more electronic devices 102 include at least one of: a local browser, a mobile application, and the like. Furthermore, the one or more end users may use a web application through the local browser, the mobile application to communicate with the ML-based computing system 104. In an embodiment of the present disclosure, the ML-based computing system 104 includes a plurality of subsystems 110. Details on the plurality of subsystems 110 have been elaborated in subsequent paragraphs of the present description with reference to **FIG. 2****.**

**FIG. 2** is a detailed view of the ML-based computing system 104 for identifying the one or more equivalent entities for each entity, in accordance with another embodiment of the present disclosure. The ML-based computing system 104 includes a memory 202, one or more hardware processors 204, and a storage unit 206. The memory 202, the one or more hardware processors 204, and the storage unit 206 are communicatively coupled through a system bus 208 or any similar mechanism. The memory 202 includes the plurality of subsystems 110 in the form of programmable instructions executable by the one or more hardware processors 204.

The plurality of subsystems 110 includes a data obtaining subsystem 210, a data pre-processing subsystem 212, an entity grouping subsystem 214, an entity identifying subsystem 216, an output subsystem 218, an accuracy assessment subsystem 220, and a re-training subsystem 222. The brief details of the plurality of subsystems 110 have been elaborated in a below table.

| **Plurality of Subsystems 110** | **Functionality** |
|---|---|
| Data obtaining subsystem 210 | The data obtaining subsystem 210 is configured to obtain the data associated with the one or more financial transactions performed by the one or more entities, from the one or more databases 108. |
| Data pre-processing subsystem 212 | The data pre-processing subsystem 212 is configured to pre-process the data associated with the one or more financial transactions. |
| Entity grouping subsystem 214 | The entity grouping subsystem 214 is configured to group the one or more entities having identical transaction numbers, into one or more initial groups. |
| | The entity grouping subsystem 214 is further configured to eliminate the one or more groups from the one or more initial groups using the machine learning model to obtain the one or more intermediate groups. |
| Entity identifying subsystem 216 | The entity identifying subsystem 216 is configured to compare the one or more entities across the one or more intermediate groups to obtain the one or more resultant groups using the iterative unionization process. |
| Output subsystem 218 | The output subsystem 218 is configured to provide the one or more resultant groups as the output to the one or more end users through the one or more user interfaces of the one or more electronic devices 102 associated with the one or more end users. |
| Accuracy assessment subsystem 220 | The accuracy assessment subsystem 220 is configured to assess an accuracy of the ML model by comparing the one or more resultant groups with one or more historical entity grouping data. |
| Re-training subsystem 222 | The re-training subsystem 222 is configured to re-train the ML model by adjusting the one or more values of the one or more parameters. |
| | The re-training subsystem 222 is further configured to process the re-trained ML model with the adjusted one or more values of the one or more parameters to optimize the accuracy of the ML model. |

The one or more hardware processors 204, as used herein, means any type of computational circuit, including, but not limited to, at least one of: a microprocessor unit, microcontroller, complex instruction set computing microprocessor unit, reduced instruction set computing microprocessor unit, very long instruction word microprocessor unit, explicitly parallel instruction computing microprocessor unit, graphics processing unit, digital signal processing unit, or any other type of processing circuit. The one or more hardware processors 204 may also include embedded controllers, including at least one of: generic or programmable logic devices or arrays, application specific integrated circuits, single-chip computers, and the like.

The memory 202 may be non-transitory volatile memory and non-volatile memory. The memory 202 may be coupled for communication with the one or more hardware processors 204, being a computer-readable storage medium. The one or more hardware processors 204 may execute machine-readable instructions and/or source code stored in the memory 202. A variety of machine-readable instructions may be stored in and accessed from the memory 202. The memory 202 may include any suitable elements for storing data and machine-readable instructions, including at least one of: read only memory, random access memory, erasable programmable read only memory, electrically erasable programmable read only memory, a hard drive, a removable media drive for handling compact disks, digital video disks, diskettes, magnetic tape cartridges, memory cards, and the like. In the present embodiment, the memory 202 includes the plurality of subsystems 110 stored in the form of machine-readable instructions on any of the above-mentioned storage media and may be in communication with and executed by the one or more hardware processors 204.

The storage unit 206 may be a cloud storage, a Structured Query Language (SQL) data store, a noSQL database or a location on a file system directly accessible by the plurality of subsystems 110.

The plurality of subsystems 110 includes the data obtaining subsystem 210 that is communicatively connected to the one or more hardware processors 204. The data obtaining subsystem 210 is configured to obtain the data associated with the one or more financial transactions performed by the one or more entities, from the one or more databases 108. In an embodiment, the data may include one or more data fields associated with at least one of: the one or more transaction types, the one or more company codes, the one or more document types, the one or more document numbers, the one or more posting keys, the one or more posting dates, the one or more invoice dates, the one or more clearing dates, the one or more clearing documents, the one or more invoice amounts, the one or more entity names, and the one or more entity numbers. In an embodiment, the data may be associated with enterprise resource planning (ERP) extracts that include at least one of: invoices, payments, debit and credit notes against purchases and sales. The ERP extracts are fetched from a communication device of the entity daily and stored in a structured query language (SQL) warehouse. The one or more data associated with the ERP extracts are fetched for the machine learning (ML) consumption on cloud virtual machines (VM).

The plurality of subsystems 110 further includes the data pre-processing subsystem 212 that is communicatively connected to the one or more hardware processors 204. The data pre-processing subsystem 212 is configured to pre-process the data associated with the one or more financial transactions. In an embodiment, pre-processing of the one or more data may include standardizing the one or more data fields. The data standardization may be configured to transform the one or more data fields into clean, organized format of the one or more data fields suitable for intelligent artificial intelligence (AI) inferences from the data. In an embodiment, standardizing the one or more data fields includes at least one of: column name standardization, datetime and numeric conversion, handling of null records, currency conversion, intra-company removal, write-off removal, and the like.

The column name standardization may include one or more information varies from one or more types of enterprise resource planning (ERP). The column name standardization by a column name standardization module is configured to determine whether one or more datasets including the one or more data having uniformity and clarity, providing data analysis and interpretation of the data. The datetime and numeric conversion is configured to standardize date and numeric formats across the one or more data fields. The null records are imputed/dropped based on at least one of: one or more seasonal trends and an impact of the null records with one or more values (i.e., absolute amount values).

The currency conversion by a currency conversion module is configured to standardize the one or more financial transactions based on one or more functional currencies of one or more business units to synchronize one or more transactional data across one or more sources, for consistency of the data. The intra-company removal is configured to remove/filter the one or more financial transactions between the one or more business units of the one or more entities. The write-off removal is configured to close/end the one or more financial transactions where one or more irrelevant invoices with a help of a single offset record by which one or more irrelevant entities are grouped.

The plurality of subsystems 110 further includes the entity grouping subsystem 214 that is communicatively connected to the one or more hardware processors 204. The entity grouping subsystem 214 is configured to generate the one or more transaction numbers for each of the one or more financial transactions by concatenating the one or more data fields of the pre-processed data. The entity grouping subsystem 214 is further configured to group the one or more entities having identical transaction numbers, into the one or more initial groups. In an embodiment, the one or more entity names are grouped into the one or more initial groups based on the one or more transaction numbers and the one or more transactions are selected where a count of the one or more entities (i.e., the one or more customers) is more than one. In an embodiment, the one or more transaction numbers are one or more combinations of at least one of: the one or more clearing documents, the one or more clearing dates, and the one or more company codes. In an embodiment, the one or more transaction numbers are configured to link the one or more data fields indicating a complete transaction cycle from creation of one or more invoices to clearing of the one or more invoices.

The below exemplary table 2 shows a sample grouping of the one or more entities into the one or more initial groups based on the one or more transaction numbers (i.e., same transaction number level) and the group of the one or more entities is used for further processes.

**TABLE. 2**

| **transaction_number** | **entity_name_list** |
|---|---|
| 3100000000_2017-01-03US04 | [AAAA PAPER CO, AAAA PAPER INC] |
| 3100000000_2017-01-03US04 | [BBBB INDUSTRIES, CCCC ENTERPRISE, DDDD INC] |
| 3100000016_2016-01-04US26 | [AAAA PAPER CO, EEEE CORP] |
| 3100000018_2017-01-04US49 | [BBBB INDUSTRIES, CCCC ENTERPRISE, EEEE CORP] |
| 3100000044_2017-01-09US49 | [BBBB INDUSTRIES, CCCC ENTERPRISE] |
| 3100000065_2019-07-21US49 | [AAAA PAPER CO, EEEE CORP, FFFF INFO] |
| 3100000065_2019-03-09US49 | [GGGG ENTERPRISE, GGGG INDUSTRIES] |

The entity grouping subsystem 214 is further configured to eliminate the one or more groups from the one or more initial groups to obtain the one or more intermediate groups, using the machine learning (ML) model. In other words, the entity grouping subsystem 214 is configured to perform frequency based entity elimination using the ML model. The ML model is an unsupervised ML model including Apriori model. In an embodiment, the Apriori model is also known as association identification model. The Apriori model may be an algorithm for frequent item set mining and association rule learning over relational databases. The Apriori model proceeds by identifying the frequent individual items in the one or more data and extending the one or more data to larger and larger item sets as long as those item sets appear sufficiently often in the one or more data.

For eliminating the one or more groups from one or more initial groups to obtain the one or more intermediate groups, using the machine learning (ML) model, the entity grouping subsystem 214 is configured to obtain information associated with the one or more initial groups, as one or more inputs to the ML model. The entity grouping subsystem 214 is further configured to set one or more values for one or more parameters associated with the one or more entities in the ML model. In an embodiment, the one or more parameters may include at least one of: a support threshold (e.g., 25 percentage), a confidence threshold (e.g., threshold value as 70 percentage), and a predefined length (e.g., maximum length as 2) of grouping of the one or more entities.

The entity grouping subsystem 214 is further configured to compute a support for each of the entity with a first length (e.g., length as 1). In an embodiment, the support for each of the entity is based on a frequency of occurrence of each of the entity within the one or more initial groups. For example, the above said table 2 depicts that AAAA industries occurred three times in second group, fourth group, and fifth group. There are total of seven transactions and the support for AAAA industries may become 3/7. The below table 3 shows the computation of the support for each entity.

**TABLE. 3**

| **entity_name** | **Support** |
|---|---|
| **BBBB INDUSTRIES** | **3/7 = 42%** |
| | |
| **AAAA PAPER CO** | **3/7 = 42%** |
| | |
| AAAA PAPER INC | 1/7 = 14% |
| | |
| **EEEE CORP** | **4/7 = 57%** |
| | |
| DDDD INC | 1/7 = 14% |
| | |
| **CCCC ENTERPRISE** | **4/7 = 57%** |
| | |
| GGGG ENTERPRISE | 1/7 = 14% |
| | |
| GGGG INDUSTRIES | 1/7 = 14% |

In an embodiment, the entity grouping subsystem 214 is further configured to maintain the one or more entity names which have support that is more than the pre-set value. For example, the item set of the one or more entities may be {BBBB industries, AAAA paper co, EEEE corp, CCCC enterprise}.

The entity grouping subsystem 214 is further configured to computing a support for a combination of the one or more entities based on a frequency of occurrence of the combination of the one or more entities, iteratively until the pre-defined length of grouping is attained. In an embodiment, the entity grouping subsystem 214 is configured to compute the support for each pair of the one or more entities with second length (e.g., the maximum length of 2). In an embodiment, the first length (e.g., the length of 1) and the second length (e.g., the length of 2) are lengths of the grouping of the one or more entities to be made between one or more individual entities in the in the frequent of item sets. The below table 4 shows the second length (i.e., the maximum length of 2) of grouping to be made between the individual entities in the frequent of item sets.

**TABLE. 4**

| **entity_name** | **Support** |
|---|---|
| BBBB INDUSTRIES, AAAA PAPER CO | 0/7 = 0% |
| | |
| BBBB INDUSTRIES, EEEE CORP | 1/7 = 14% |
| | |
| **BBBB INDUSTRIES, CCCC ENTERPRISE** | **3/7 = 42%** |
| | |
| **AAAA PAPER CO, EEEE CORP** | **2/7 = 28%** |
| | |
| AAAA PAPER CO, CCCC ENTERPRISE | 1/7 = 14% |
| | |
| **EEEE CORP, CCCC ENTERPRISE** | **3/7 = 42%** |

The frequent item sets may be {[AAAA paper co, EEEE corp], [BBBB industries, CCCC enterprise], [EEEE corp, CCCC enterprise]}.

The entity grouping subsystem 214 is further configured to compute a confidence value for each of the combination of the one or more entities using the support computed for each of the entity and the support computed for the combination of the one or more entities. In an embodiment, the entity grouping subsystem 214 is configured to compute the confidence value for each entity based on an occurrence of each pair of the one or more entities in one or more financial transactions (i.e., Support (A U B)), divided by an occurrence of the one or more entities in the one or more financial transactions (i.e., Support (A)). The below table 5 shows the computation of the confidence value for each entity.

**TABLE. 5**

| **Rules (A U B)** | **Rules (A)** | **Support(A U B)** | **Support (A)** | **Confidence** | **Confidence %** |
|---|---|---|---|---|---|
| | | | | | |
| **BBBB INDUSTRIES, CCCC ENTERPRISE** | **BBBB INDUSTRIES** | **3** | **3** | **3/3** | **100%** |
| | | | | | |
| AAAA PAPER CO, EEEE CORP | AAAA PAPER CO | 2 | 3 | 2/3 | 66% |
| | | | | | |
| **EEEE CORP, CCCC ENTERPRISE** | **EEEE CORP** | **3** | **4** | **3/4** | **75%** |
| | | | | | |
| **CCCC ENTERPRISE, BBBB INDUSTRIES,** | **CCCC ENTERPRISE** | **3** | **4** | **3/4** | **75%** |
| | | | | | |
| EEEE CORP, AAAA PAPER CO | EEEE CORP | 2 | 4 | 2/4 | 50% |
| | | | | | |
| **CCCC ENTERPRISE, EEEE CORP** | **CCCC ENTERPRISE** | **3** | **4** | **3/4** | **75%** |

The selected/highlighted combinations of the one or more entities may have the confidence threshold (e.g., 70 percentage and above). To elaborate, the one or more intermediate groups are obtained from the combination of the one or more entities having the confidence value exceeding the confidence threshold. In an embodiment, the associations or the group of the one or more entities are (a) BBBB industries and CCCC enterprise, (b) EEEE corp and CCCC enterprise, (c) CCCC enterprise and BBBB industries, and (d) CCCC ENTERPRISE, EEEE CORP are considered as the one or more intermediate groups that are obtained from the combination of the one or more entities having the confidence value exceeding the confidence threshold.

The plurality of subsystems 110 further includes the entity identifying subsystem 216 that is communicatively connected to the one or more hardware processors 204. The entity identifying subsystem 216 is configured to compare the one or more entities across the one or more intermediate groups to obtain the one or more resultant groups, using the iterative unionization process. In an embodiment, each of the one or more resultant group may include the one or more equivalent entities performing the one or more financial transactions. For comparing the one or more entities across the one or more intermediate groups using the iterative unionization process to obtain the one or more resultant groups, the entity identifying subsystem 216 is configured to determine an intersection of each intermediate group with the one or more intermediate groups. For example, the one or more entities under group 1 may include ABC 1 and ABC 2. The one or more entities under group 2 may include ABC 2 and ABC 3. As both the groups (i.e., group 1 and group 2) have the one or more entities ABC 2 as a common entity, it is logical to indicate that the one or more entities ABC 1 and ABC 3 also should be in the same group.

The entity identifying subsystem 216 is further configured to perform an unionization process between each intersected intermediate group, to obtain the one or more resultant groups. In other words, the entity identifying subsystem 216 is further configured to delete the one or more intermediate groups on which the union has applied. The entity identifying subsystem 216 is further configured to store the one or more intermediate groups.

The entity identifying subsystem 216 is further configured to compare the one or more intermediate groups with the one or more resultant groups including the one or more equivalent entities performing the one or more financial transactions. The entity identifying subsystem 216 is further configured to repeat the iterative unionization process until a count of the one or more resultant groups are equal to a count of the one or more intermediate groups. In an embodiment, the one or more resultant groups are considered/determined as one or more inputs to the iterative unionization process when the count of the one or more resultant groups is not equal to the count of the one or more intermediate groups.

The plurality of subsystems 110 further includes the output subsystem 218 that is communicatively connected to the one or more hardware processors 204. The output subsystem 218 is configured to provide the one or more resultant groups as the output, to the one or more end users through the one or more user interfaces of the one or more electronic devices 102 associated with the one or more end users. For example, if the entity group is (A, B, C, D), the equivalent entities for A user are (B, C, D), and equivalent entities for B, are (A, C, D), and the like.

The plurality of subsystems 110 further includes the accuracy assessment subsystem 220 that is communicatively connected to the one or more hardware processors 204. The accuracy assessment subsystem 220 is configured to determine an accuracy of the ML model during initial implementation. The accuracy of the ML model may be assessed using the accuracy assessment subsystem 220 in one or more ways. In one way, the accuracy assessment subsystem 220 is configured to assess the accuracy of the ML model by comparing the one or more resultant groups with one or more historical entity grouping data that may be initially present with the ML-based computing system 104. In another way, the accuracy assessment subsystem 220 is configured to allow the one or more end users to verify the accuracy of the ML model.

The plurality of subsystems 110 further includes the re-training subsystem 222 that is communicatively connected to the one or more hardware processors 204. The re-training subsystem 222 is configured to re-train the ML model over a plurality of time intervals by adjusting the one or more values of the one or more parameters, when the accuracy of the ML model on obtaining the one or more intermediate groups, is below a predetermined accuracy threshold value. The re-training subsystem 222 is further configured to process the re-trained ML model with the adjusted one or more values of the one or more parameters to optimize the accuracy of the ML model.

In an embodiment, for re-training the ML model, the re-training subsystem 222 is initially configured to receive the one or more training data associated with the one or more values of the one or more parameters. The re-training subsystem 222 is further configured to add the one or more training data with one or more training datasets to generate one or more updated training datasets. The re-training subsystem 222 is further configured to re-train the machine learning model to correlate one or more feature vectors with the one or more values of the one or more parameters. The re-training subsystem 222 is further configured to execute the re-trained ML model in the entity grouping subsystem 214 to obtain the one or more intermediate groups.

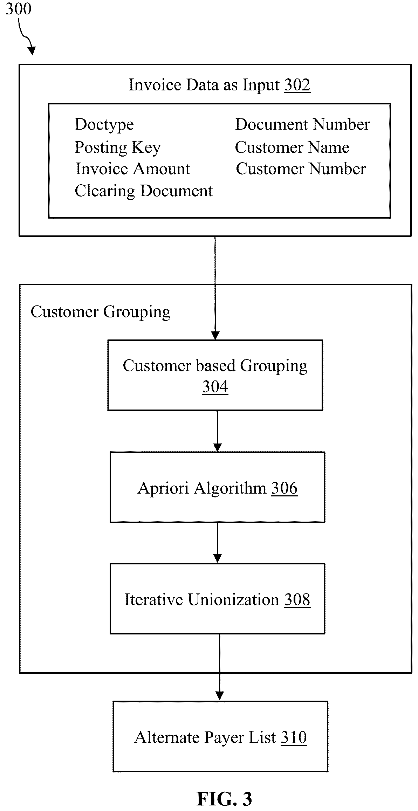

**FIG. 3** is an overall process flow 300 of identifying the one or more equivalent entities, in accordance with another embodiment of the present disclosure. At step 302, the data (e.g., one or more invoice data) associated with one or more financial transactions performed by one or more entities, are obtained from the one or more databases 108, as one or more inputs. At step 304, the one or more entities having the identical transaction numbers, are grouped into the one or more initial groups. At step 306, the one or more groups are eliminated from the one or more initial groups using the machine learning (ML) model including the Apriori model, to obtain the one or more intermediate groups. In an embodiment, the ML model is configured to obtain the one or more intermediate groups using the association identified within the one or more initial groups based on frequent item sets within the one or more initial groups. At step 308, the one or more entities across the one or more intermediate groups, are compared, to obtain one or more resultant groups using the iterative unionization process. In an embodiment, each of the one or more resultant group may include the one or more equivalent entities performing the one or more financial transactions. At step 310, the one or more equivalent entities (i.e., a list of alternate payers) for each entity is provided as the output through the one or more interfaces of the one or more electronic devices 102 associated with the one or more end users.

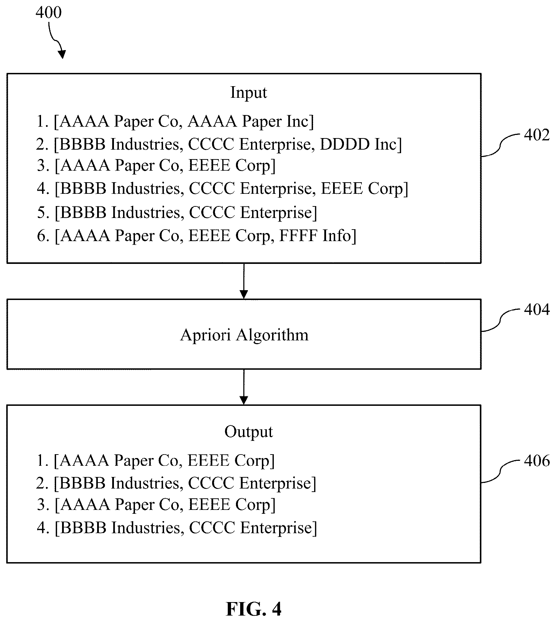

**FIG. 4** is an exemplary process flow 400 depicting eliminating the one or more groups from one or more initial groups using the machine learning (ML) model to obtain one or more intermediate groups. At step 402, the one or more initial groups with the one or more entities (1. AAAA Paper Co, AAAA Paper Inc, 2. BBBB Industries, CCCC Enterprise, DDDD Inc, 3. AAAA Paper Co, EEEE Corp, 4. BBBB Industries, CCCC Enterprise, EEEE Corp, 5. BBBB Industries, CCCC Enterprise, and 6. AAAA Paper Co, EEEE Corp, FFFF Info, as depicted in **FIG.4**), are inputted at the Apriori model.

At step 404, the Apriori model is configured to set the one or more values for the one or more parameters associated with the one or more entities. In an embodiment, the one or more parameters may include at least one of: the support threshold, the confidence threshold, and the predefined length of grouping of the one or more entities. The Apriori model is further configured to compute the support for each of the entity based on a frequency of occurrence of each of the entity within the one or more initial groups. Further, the Apriori model computes a support for a combination of the one or more entities (For example a pair of entities or a triad of entities and like) based on a frequency of occurrence of the combination of the one or more entities, iteratively until the predefined length of grouping is attained. More particularly, the combination of the one or more entities comprises grouping of the one or more entities having the support exceeding the support threshold. The Apriori model is further configured to compute the confidence value for each entity based on the occurrence of each combination of the one or more entities divided by the occurrence of each of the one or more entities.

At step 406, the one or more intermediate groups are obtained as an output (1. AAAA Paper Co, EEEE Corp, 2. BBBB Industries, CCCC Enterprise, 3. AAAA Paper Co, EEEE Corp, and 4. BBBB Industries, CCCC Enterprise, as illustrated in FIG. 4), based on the one or more groups eliminated from the one or more initial groups using the ML model including the Apriori model.

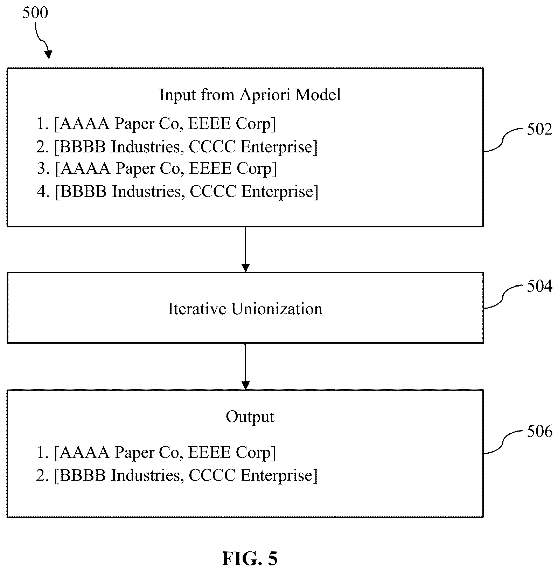

**FIG. 5** is an exemplary process flow 500 of identifying the one or more equivalent entities using the iterative unionization process, in accordance with another embodiment of the present disclosure. At step 502, the one or more intermediate groups with the one or more entities (In the illustrative embodiment as depicted in **FIG. 5**, the input from the Apriori model comprises 1. AAAA Paper Co, EEEE Corp, 2. BBBB Industries, CCCC Enterprise, 3. AAAA Paper Co, EEEE Corp, and 4. BBBB Industries, CCCC Enterprise), is inputted at the Apriori model. At step 504, the one or more entities across the one or more intermediate groups are compared using the iterative unionization process to obtain the one or more resultant groups. In an embodiment, each of the one or more resultant group may include the one or more equivalent entities performing the one or more financial transactions. At step 506, the identified one or more equivalent entities for each first entity, are provided as the output (In the illustrative embodiment as depicted in **FIG. 5**, the output comprises 1. AAAA Paper Co, EEEE Corp and 2. BBBB Industries, CCCC Enterprise) through the one or more user interfaces of the one or more electronic devices 102 associated with the one or more end users.

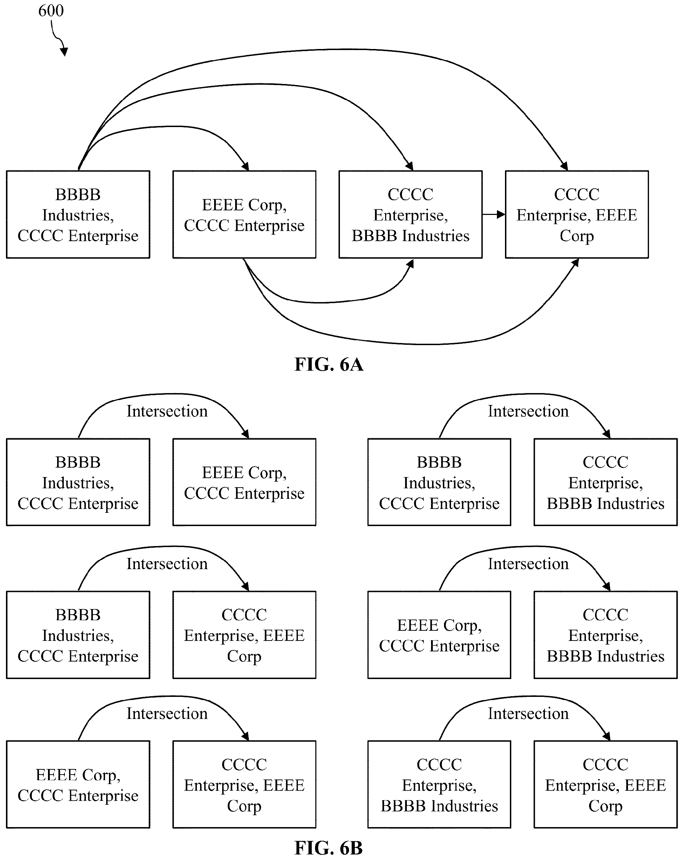

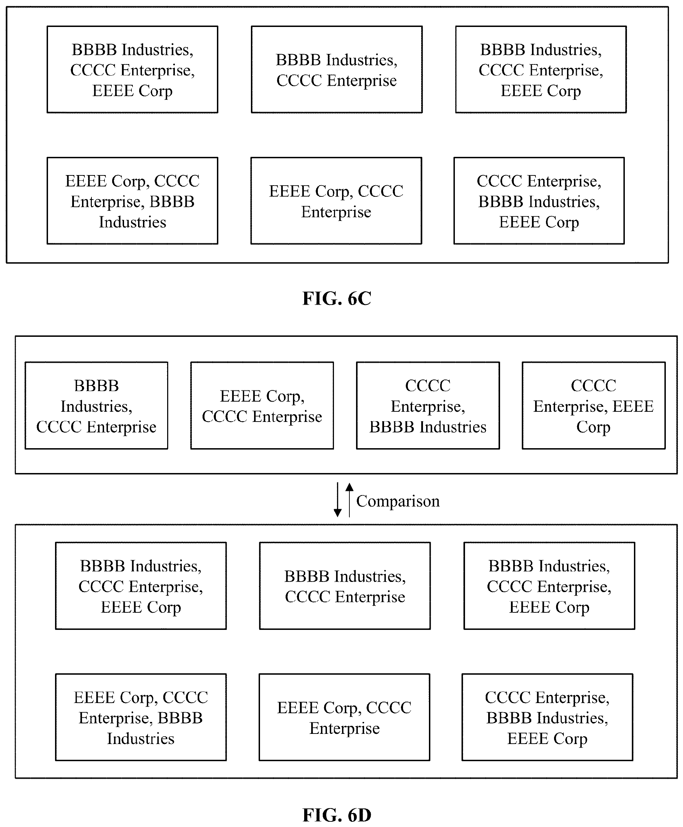

**FIGS. 6A-6D** are exemplary process flows of identifying the one or more equivalent entities using the iterative unionization process, such as shown in **FIG. 5**, in accordance with another embodiment of the present disclosure. **FIG. 6A** depicts that the iterative unionization process includes a process of determining the intersection of each intermediate group with the one or more intermediate groups. For example, a group 1 comprises BBBB Industries, CCCC Enterprise, a group 2 comprises EEEE Corp, CCCC Enterprise, a group 3 comprises CCCC Enterprise, BBBB Industries, and a group 4 comprises CCCC Enterprise, EEEE Corp. By intersecting the group 1, the group 2, the group 3 and the group 4, the iterative unionization process identifies overlaps (i.e., common entities) between them. **FIG. 6B** depicts the intersected intermediate groups upon determining the intersection of each intermediate group with the one or more intermediate groups. For example, the intersection between the group 1 and the group 2 shows EEEE Corp, CCCC Enterprise as a common group. The intersections continue similarly for other combinations, aiming to consolidate entities based on shared characteristics or transactions. **FIG. 6C** depicts that the iterative unionization process further includes a process of performing the unionization process between each intersected intermediate group, to obtain the one or more resultant groups including the one or more entities performing the one or more financial transactions. In other words, the iterative unionization process includes a process of deleting one or more intermediate groups on which the union has applied. In an embodiment, the one or more intermediate groups are stored as a customer group. For example, the group BBBB Industries, CCCC Enterprise, EEEE Corp shows that these entities are grouped together after the iterative unionization process. The iterative unionization process repeats for all intersected groups, eventually consolidating entities performing similar financial transactions into larger resultant groups.

**FIG. 6D** depicts that the iterative unionization process further includes a process of comparing the one or more entities across the one or more intermediate groups with the one or more resultant groups. In an embodiment, each of the one or more resultant groups may include the one or more equivalent entities performing the one or more financial transactions. For example, the one or more intermediate groups comprises the group 1 - BBBB Industries, CCCC Enterprise, the group 2 - EEEE Corp, CCCC Enterprise, the group 3 - CCCC Enterprise, BBBB Industries, and the group 4 - CCCC Enterprise, EEEE Corp. After performing the iterative unionization process, the one or more resultant groups comprise a resultant group 1: BBBB Industries, CCCC Enterprise, EEEE Corp, and a resultant group 2: CCCC Enterprise, BBBB Industries, EEEE Corp. In this step, the group 1 - BBBB Industries, CCCC Enterprise compare with the resultant group 1 and the resultant group 2. The intermediate group i.e. the group 1 is fully contained within the resultant group 1, so no further action is needed here. Similarly, the comparison between the group 2 with the resultant group 1 and the resultant group 2, the intermediate group i.e. the group 2 matches the entities in the resultant group 1, meaning EEEE Corp and CCCC Enterprise are already accounted for. This suggests that the group 2 is accurately captured in resultant group 1. The group 3 matches part of the resultant group 2, The CCCC Enterprise and BBBB Industries are already in the resultant group 2, indicating that this intermediate group has also been appropriately consolidated. The one or more entities in the group 4 are present across both the resultant group 1 and the resultant group 2. Therefore, CCCC Enterprise and EEEE Corp are correctly represented across the one or more resultant groups.

The iterative unionization process is repeated until the count of the one or more resultant groups is equal to the count of the one or more intermediate groups. In an embodiment, the one or more resultant groups are one or more inputs to the iterative unionization process when the count of the one or more resultant groups is not equal to the count of the one or more intermediate groups.

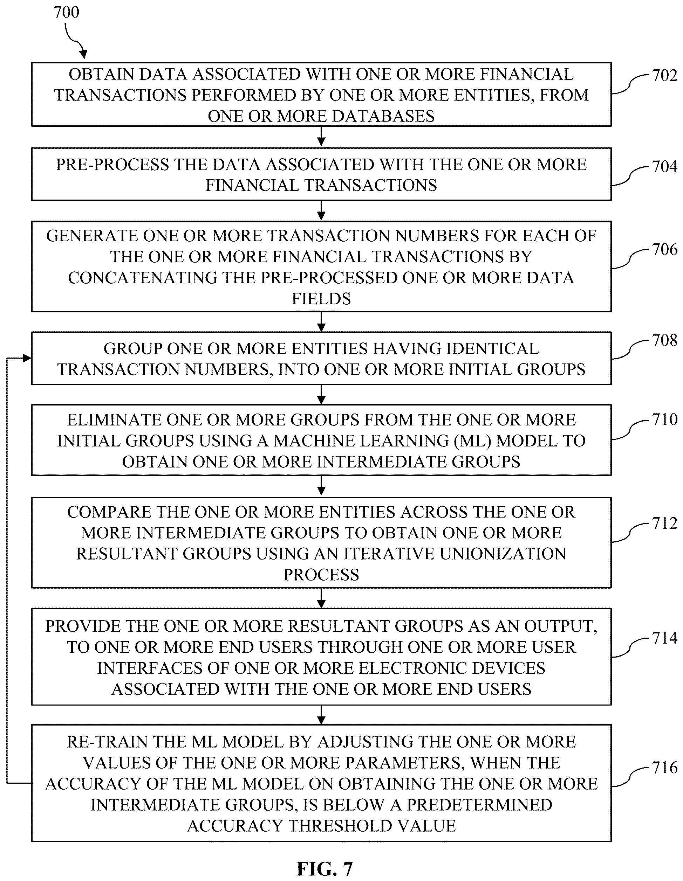

**FIG. 7** is a flow chart illustrating a machine-learning based (ML-based) computing method 700 for identifying the one or more equivalent entities, in accordance with an embodiment of the present disclosure. At step 702, the data associated with the one or more financial transactions performed by the one or more entities, are obtained from the one or more databases 108. In an embodiment, the data may include the one or more data fields associated with at least one of: the one or more transaction types, the one or more company codes, the one or more document types, the one or more document numbers, the one or more posting keys, the one or more posting dates, the one or more invoice dates, the one or more clearing dates, the one or more clearing documents, the one or more invoice amounts, the one or more entity names, the one or more entity numbers, and the like.

At step 704, the data associated with the one or more financial transactions are pre-processed. In an embodiment, pre-processing the one or more data may include standardizing the one or more data fields.

At step 706, the one or more transaction numbers are generated for each of the one or more financial transactions by concatenating the pre-processed one or more data fields.

At step 708, the one or more entities having the identical transaction numbers, are grouped into the one or more initial groups. In an embodiment, the one or more transaction numbers are the one or more combinations of at least one of: the one or more clearing documents, the one or more clearing dates, the one or more company codes, and the like. In an embodiment, the one or more transaction numbers are configured to link the one or more data fields indicating the complete transaction cycle from creation of the one or more invoices to clearing of the one or more invoices.

At step 708, the one or more groups are eliminated from the one or more initial groups using the machine learning (ML) model, to obtain the one or more intermediate groups. The ML model is configured to obtain the one or more intermediate groups using the association identified within the one or more initial groups based on the frequent item sets within the one or more initial groups.

At step 710, the one or more entities across the one or more intermediate groups are compared to obtain the one or more resultant groups using an iterative unionization process. In an embodiment, each of the one or more resultant group may include the one or more equivalent entities performing the one or more financial transactions.

At step 712, the one or more resultant groups are provided as the output to the one or more end users through the one or more user interfaces of the one or more electronic devices 102 associated with the one or more end users.

The present invention has following advantages. The primary purpose of the present invention is to automatically identify equivalent entity identities for an entity identity in accounts receivable (AR) data within a company code. The identification allows creation of a group of equivalent entity identities. The present invention enables (a) improved payment-remittance reconciliation for multi alternate entities (i.e., multi alt payer entities), (b) improved forecasting of explainability of custom behavior, (c) optimized predictions on credit memo claim behavior; (d) improved credit management keeping in mind exposure to all equivalent entities; (e) more effective collections outreach to the one or more entities; and (f) more useful entity insight generation.

The present invention with the ML-based computing system 104 is configured to automatically identify the one or more equivalent entities. The ML-based computing system 104 is used in fields of cash applications or reconciliation. Process automation may be increased in the cash applications by usage of the ML-based computing system 104. As the cash application process does not have auto identification of the equivalent entities and this identification is done manually. Auto identification of effective entities (i.e., payers) may automatically identify the equivalent payers, by treating equivalent entity identities as a single entity/customer, even if payment and remittance have different customer identities treated as the same and are linked.

In cash forecasting, if invoice and payment have different entity information, invoice remains open for sometimes even though payment has been received due to this forecast getting affected. By grouping effective entities, the customer level differences are removed and invoice and payments get linked. While cash forecasting, if the credit-memos have different entity identities then predicting the credit-memo claim behavior becomes challenging. This challenge may be avoided by grouping equivalent entity identities.

The ML-based computing system 104 is used in fields of credit management. credit limit at customer level may get affected, as the invoices might already have been cleared by another equivalent entity identity, but due to difference in entity details, the system is unable to capture the differences and the invoices may be closed. Further, collections face issues, as payment might already have been received, but due to different entity details payment-remittance reconciliation did not happen and collections might still contact the entity. This may be avoided using equivalent entity identities. The existing technologies may face difficulty in generating reports automatically as the same entity might have multiple entity details so the entity may be treated as separate entities. The present invention groups equivalent entity identities as one entity makes the process automated and reporting streamlined.

Further, the present invention is configured to fully automate the remittances with the help of predicted business fields (i.e., every data item identified/captured without entity intervention is considered a success for the ML model).

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments herein can comprise hardware and software elements. The embodiments that are implemented in software include but are not limited to, firmware, resident software, microcode, etc. The functions performed by various modules described herein may be implemented in other modules or combinations of other modules. For the purposes of this description, a computer-usable or computer-readable medium can be any apparatus that can comprise, store, communicate, propagate, or transport the program for use by or in connection with the instruction execution system, apparatus, or device.

The medium can be an electronic, magnetic, optical, electromagnetic, infrared, or semiconductor system (or apparatus or device) or a propagation medium. Examples of a computer-readable medium include a semiconductor or solid-state memory, magnetic tape, a removable computer diskette, a random-access memory (RAM), a read-only memory (ROM), a rigid magnetic disk and an optical disk. Current examples of optical disks include compact disk-read only memory (CD-ROM), compact disk-read/write (CD-R/W) and DVD.

Input/output (I/O) devices (including but not limited to keyboards, displays, pointing devices, etc.) can be coupled to the ML-based computing system 104 either directly or through intervening I/O controllers. Network adapters may also be coupled to the ML-based computing system 104 to enable the data processing system to become coupled to other data processing systems or remote printers or storage devices through intervening private or public networks. Modems, cable modem and Ethernet cards are just a few of the currently available types of network adapters.

A representative hardware environment for practicing the embodiments may include a hardware configuration of an information handling/ML-based computing system 104 in accordance with the embodiments herein. The ML-based computing system 104 herein comprises at least one processor or central processing unit (CPU). The CPUs are interconnected via the system bus 208 to various devices including at least one of: a random-access memory (RAM), read-only memory (ROM), and an input/output (I/O) adapter. The I/O adapter can connect to peripheral devices, including at least one of: disk units and tape drives, or other program storage devices that are readable by the ML-based computing system 104. The ML-based computing system 104 can read the inventive instructions on the program storage devices and follow these instructions to execute the methodology of the embodiments herein.

The ML-based computing system 104 further includes a user interface adapter that connects a keyboard, mouse, speaker, microphone, and/or other user interface devices including a touch screen device (not shown) to the bus to gather user input. Additionally, a communication adapter connects the bus to a data processing network, and a display adapter connects the bus to a display device which may be embodied as an output device including at least one of: a monitor, printer, or transmitter, for example.

A description of an embodiment with several components in communication with each other does not imply that all such components are required. On the contrary, a variety of optional components are described to illustrate the wide variety of possible embodiments of the invention. When a single device or article is described herein, it will be apparent that more than one device/article (whether or not they cooperate) may be used in place of a single device/article. Similarly, where more than one device or article is described herein (whether or not they cooperate), it will be apparent that a single device/article may be used in place of the more than one device or article, or a different number of devices/articles may be used instead of the shown number of devices or programs. The functionality and/or the features of a device may be alternatively embodied by one or more other devices which are not explicitly described as having such functionality/features. Thus, other embodiments of the invention need not include the device itself.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope and spirit of the disclosed embodiments. Also, the words "comprising," "having," "containing," and "including," and other similar forms are intended to be equivalent in meaning and be open-ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise.

Finally, the language used in the specification has been principally selected for readability and instructional purposes, and it may not have been selected to delineate or circumscribe the inventive subject matter. It is therefore intended that the scope of the invention be limited not by this detailed description, but rather by any claims that are issued on an application based here on. Accordingly, the embodiments of the present invention are intended to be illustrative, but not limiting, of the scope of the invention, which is set forth in the following claims.

## Claims

1. A machine-learning based (ML-based) computing method for automatically identifying one or more equivalent entities, the ML-based computing method comprising:
obtaining, by one or more hardware processors, data associated with one or more financial transactions performed by one or more entities, from one or more databases, wherein the data comprise one or more data fields associated with at least one of: one or more transaction types, one or more company codes, one or more document types, one or more document numbers, one or more posting keys, one or more posting dates, one or more invoice dates, one or more clearing dates, one or more clearing documents, one or more invoice amounts, one or more entity names, and one or more entity numbers;
pre-processing, by the one or more hardware processors, the data associated with the one or more financial transactions, wherein pre-processing the one or more data comprise standardizing the one or more data fields;
generating, by the one or more hardware processors, one or more transaction numbers for each of the one or more financial transactions by concatenating the pre-processed one or more data fields;
grouping, by the one or more hardware processors, one or more entities having identical transaction numbers, into one or more initial groups;
eliminating, by the one or more hardware processors, one or more groups from the one or more initial groups using a machine learning (ML) model to obtain one or more intermediate groups, wherein the ML model is configured to obtain the one or more intermediate groups using an association identified within the one or more initial groups based on frequent item sets within the one or more initial groups;
comparing, by the one or more hardware processors, the one or more entities across the one or more intermediate groups to obtain one or more resultant groups using an iterative unionization process, wherein each of the one or more resultant group comprises the one or more equivalent entities performing the one or more financial transactions; and
providing, by the one or more hardware processors, the one or more resultant groups as an output to one or more end users through one or more user interfaces of one or more electronic devices associated with the one or more end users.

2. The ML-based computing method of claim 1, wherein standardizing the data comprises at least one of: column name standardization, datetime and numeric conversion, handling of null records, currency conversion, intra-company removal, and write-off removal.

3. The ML-based computing method of claim 2, further comprising:
determining, by the one or more hardware processors, whether one or more datasets comprising the data having uniformity and clarity, providing data analysis and interpretation of the data, using the column name standardization, wherein the column name standardization comprise one or more information varies from one or more types of enterprise resource planning (ERP);
standardizing, by the one or more hardware processors, date and numeric formats across the one or more data fields using the datetime and numeric conversion;
filtering, by the one or more hardware processors, the null records based on at least one of: one or more seasonal trends and an impact of the null records with one or more values;
standardizing, by the one or more hardware processors, the one or more financial transactions based on one or more functional currencies of one or more business units to synchronize one or more transactional data across one or more sources, for consistency of the data, using the currency conversion;
filtering, by the one or more hardware processors, the one or more financial transactions between the one or more business units of the one or more entities, using the intra-company removal; and
ending, by the one or more hardware processors, the one or more financial transactions where one or more irrelevant invoices using a single offset record by which one or more irrelevant entities are grouped, using the write-off removal.

4. The ML-based computing method of claim 1, wherein eliminating the one or more groups from the one or more initial groups using the ML model to obtain the one or more intermediate groups, comprises:
obtaining, by the one or more hardware processors, information associated with the one or more initial groups, as one or more inputs to the ML model, wherein the ML model is an unsupervised ML model comprising an apriori model;
setting, by the one or more hardware processors, one or more values for one or more parameters associated with the one or more entities in the ML model, wherein the one or more parameters comprise at least one of: a support threshold, a confidence threshold , and a predefined length of grouping of the one or more entities;
computing, by the one or more hardware processors, a support for each of the entity based on a frequency of occurrence of each of the entity within the one or more initial groups;
computing, by the one or more hardware processors, a support for a combination of the one or more entities based on a frequency of occurrence of the combination of the one or more entities, iteratively until the pre-defined length of grouping is attained, wherein the combination of the one or more entities comprises grouping of the one or more entities having the support exceeding the support threshold; and
computing, by the one or more hardware processors, a confidence value for each of the combination of the one or more entities using the support computed for each of the entity and the support computed for the combination of the one or more entities, wherein the one or more intermediate groups are obtained from the combination of the one or more entities having the confidence value exceeding the confidence threshold.

5. The ML-based computing method of claim 1, wherein the iterative unionization process comprises:
determining, by the one or more hardware processors, an intersection of each intermediate group with the one or more intermediate groups;
performing, by the one or more hardware processors, an unionization process between each intersected intermediate group, to obtain the one or more resultant groups;
comparing, by the one or more hardware processors, the one or more intermediate groups with the one or more resultant groups to determine whether a count of the one or more resultant groups is equal to a count of the one or more intermediate groups; and
repeating, by the one or more hardware processors, the iterative unionization process until the count of the one or more resultant groups is equal to the count of the one or more intermediate groups, wherein the one or more resultant groups are determined as one or more inputs to the iterative unionization process when the count of the one or more resultant groups is not equal to the count of the one or more intermediate groups.

6. The ML-based computing method of claim 1, further comprising assessing, by the one or more hardware processors, an accuracy of the ML model by comparing the one or more resultant groups with one or more historical entity grouping data.

7. The ML-based computing method of claim 6, further comprising:
re-training, by the one or more hardware processors, the ML model by adjusting the one or more values of the one or more parameters, when the accuracy of the ML model on obtaining the one or more intermediate groups, is below a predetermined accuracy threshold value; and
processing, by the one or more hardware processors, the re-trained ML model with the adjusted one or more values of the one or more parameters to optimize the accuracy of the ML model.

8. A machine-learning based (ML-based) computing system for automatically identifying one or more equivalent entities, the ML-based computing system comprising:
one or more hardware processors;
a memory coupled to the one or more hardware processors, wherein the memory comprises a plurality of subsystems in form of programmable instructions executable by the one or more hardware processors, and wherein the plurality of subsystems comprises:
a data obtaining subsystem configured to obtain data associated with one or more financial transactions performed by one or more entities, from one or more databases, wherein the data comprise one or more data fields associated with at least one of: one or more transaction types, one or more company codes, one or more document types, one or more document numbers, one or more posting keys, one or more posting dates, one or more invoice dates, one or more clearing dates, one or more clearing documents, one or more invoice amounts, one or more entity names, and one or more entity numbers;
a data pre-processing subsystem configured to pre-process the data associated with the one or more financial transactions, wherein pre-processing of the data comprise standardizing the one or more data fields;
an entity grouping subsystem configured to:
generate one or more transaction numbers for each of the one or more financial transactions by concatenating the pre-processed one or more data fields;
group one or more entities having identical transaction numbers, into one or more initial groups; and
eliminate one or more groups from the one or more initial groups using a machine learning (ML) model to obtain one or more intermediate groups, wherein the ML model is configured to obtain the one or more intermediate groups using an association identified within the one or more initial groups based on frequent item sets within the one or more initial groups;
an entity identifying subsystem configured to compare the one or more entities across the one or more intermediate groups to obtain one or more resultant groups using an iterative unionization process, wherein each of the one or more resultant group comprises the one or more equivalent entities performing the one or more financial transactions; and
an output subsystem configured to provide the one or more resultant groups as an output, to one or more end users through one or more user interfaces of one or more electronic devices associated with the one or more end users.

9. The ML-based computing system of claim 8, wherein standardizing the data comprises at least one of: column name standardization, datetime and numeric conversion, handling of null records, currency conversion, intra-company removal, and write-off removal.

10. The ML-based computing system of claim 9, wherein:
the column name standardization comprise one or more information varies from one or more types of enterprise resource planning (ERP), wherein the column name standardization is configured to determine whether one or more datasets comprising the data having uniformity and clarity, providing data analysis and interpretation of the data;
the datetime and numeric conversion is configured to standardize date and numeric formats across the one or more data fields;
the null records are filtered based on at least one of: one or more seasonal trends and an impact of the null records with one or more values;
the currency conversion is configured to standardize the one or more financial transactions based on one or more functional currencies of one or more business units to synchronize one or more transactional data across one or more sources, for consistency of the data;
the intra-company removal is configured to filter the one or more financial transactions between the one or more business units of the one or more entities; and
the write-off removal is configured to end the one or more financial transactions where one or more irrelevant invoices using a single offset record by which one or more irrelevant entities are grouped.

11. The ML-based computing system of claim 8, wherein in eliminating the groups from the one or more initial groups using the ML model to obtain the one or more intermediate groups, the entity grouping subsystem is configured to:
obtain information associated with the one or more initial groups, as one or more inputs to the ML model, wherein the ML model is an unsupervised ML model comprising an apriori model;
set one or more values for one or more parameters associated with the one or more entities in the ML model, wherein the one or more parameters comprise at least one of: a support threshold, a confidence threshold, and a predefined length of grouping of the one or more entities,
compute a support for each of the entity based on a frequency of occurrence of each of the entity within the one or more initial groups;
compute a support for a combination of the one or more entities based on a frequency of occurrence of the combination of the one or more entities, iteratively until the pre-defined length of grouping is attained, wherein the combination of the one or more entities comprises grouping of the one or more entities having the support exceeding the support threshold; and
compute a confidence value for each of the combination of the one or more entities using the support computed for each of the entity and the support computed for the combination of the one or more entities, wherein the one or more intermediate groups are obtained from the combination of the one or more entities having the confidence value exceeding the confidence threshold.

12. The ML-based computing system of claim 8, wherein in the iterative unionization process, the entity identifying subsystem is configured to:
determine an intersection of each intermediate group with the one or more intermediate groups;
perform an unionization process between each intersected intermediate group, to obtain the one or more resultant groups;
compare the one or more intermediate groups with the one or more resultant groups to determine whether a count of the one or more resultant groups is equal to a count of the one or more intermediate groups; and
repeat the iterative unionization process until the count of the one or more resultant groups is equal to the count of the one or more intermediate groups, wherein the one or more resultant groups are determined as one or more inputs to the iterative unionization process when the count of the one or more resultant groups is not equal to the count of the one or more intermediate groups.

13. The ML-based computing system of claim 8, further comprising an accuracy assessment subsystem is configured to assess an accuracy of the ML model by comparing the one or more resultant groups with one or more historical entity grouping data .

14. The ML-based computing system of claim 13, further comprising a re-training subsystem configured to:
re-train the ML model by adjusting the one or more values of the one or more parameters, when the accuracy of the ML model on obtaining the one or more intermediate groups, is below a predetermined accuracy threshold value; and
process the re-trained ML model with the adjusted one or more values of the one or more parameters to optimize the accuracy of the ML model.

15. A non-transitory computer-readable storage medium having instructions stored therein that when executed by a hardware processor, cause the processor to execute operations of:
obtaining data associated with one or more financial transactions performed by one or more entities, from one or more databases, wherein the data comprise one or more data fields associated with at least one of: one or more transaction types, one or more company codes, one or more document types, one or more document numbers, one or more posting keys, one or more posting dates, one or more invoice dates, one or more clearing dates, one or more clearing documents, one or more invoice amounts, one or more entity names, and one or more entity numbers;
pre-processing the data associated with the one or more financial transactions, wherein pre-processing the data comprise standardizing the one or more data fields;
generating one or more transaction numbers for each of the one or more financial transactions by concatenating the pre-processed one or more data fields ;
grouping one or more entities having identical transaction numbers, into one or more initial groups;
eliminating one or more groups from the one or more initial groups using a machine learning (ML) model to obtain one or more intermediate groups, wherein the ML model is configured to obtain the one or more intermediate groups using an association identified within the one or more initial groups based on frequent item sets within the one or more initial groups;
comparing the one or more entities across the one or more intermediate groups to obtain one or more resultant groups using an iterative unionization process, wherein each of the one or more resultant group comprises the one or more equivalent entities performing the one or more financial transactions; and
providing one or more resultant groups as an output, to one or more end users through one or more user interfaces of one or more electronic devices associated with the one or more end users.
